# EUROPEAN PATENT APPLICATION

(11) **EP 4 750 102 A1**
(43) Date of publication of application: **27.05.2026**
(21) Application number: 24215597.6
(22) Date of filing: 26.11.2024
(51) Int. Cl.: H04W 8/18, H04W 8/20, H04W 4/70, H04L 9/40

(54) **DEVICE FOR USE IN WIRELESS COMMUNICATION**

(71) Applicant: Giesecke+Devrient Mobile Security Germany GmbH, 81677 München (DE)
(72) Inventor: Amoros, Luis Miguel, 08820 El Prat de Llobregat, Barcelona (ES); Espi, Sergio, 08820 El Prat de Llobregat, Barcelona (ES)
(74) Representative: Giesecke+Devrient IP

(57) **Abstract**

Device for use in wireless communication, said device comprising an embedded universal integrated circuit card (eUICC) and a communication modem, wherein the eUICC comprises a first part and a second part, wherein the first part of the eUICC denoted as SGP.22 part comprises a first profile denoted as MNO1 profile and a first Issuer Security Domain Root (ISD-R) and the second part of the eUICC denoted as SGP.32 part comprises a second profile denoted as MNO2 profile and a second Issuer Security Domain Root (ISD-R), wherein at least two baseband processors for wireless communication are mounted in the communication modem and the MNO1 profile occupies a first baseband processor and the MNO2 profile occupies a second baseband processor, wherein the first ISD-R is selectable by a Local Profile Assistant (LPA) managing the MNO1 profile, and the second ISD-R is selectable by an IoT Profile Assistant (IPA) managing the MNO2 profile, wherein the device is configured in such a way that at least one of the MNO1 profile and the MNO2 profile is in the enabled state.

## Description

The invention pertains to a device for use in wireless communication, said device comprising an embedded universal integrated circuit card (eUICC) and a communication modem.

MEP (Multiple Enabled Profiles) is a feature that was introduced in SGP.22 v3.0. This feature allows to have multiple profiles active at the same time. A baseband modem that can handle multiple cellular connections simultaneously may use an MEP eUICC to support the DSDS (Dual SIM Dual Standby) and/or DSDA (Dual SIM Dual Active) use cases.

The MEP concept relies on the usage of a LSI (Logical Secure element Interface) defined in ETSI TS 102 221 v17.2.0 (Release 17). This feature allows to multiplex several logical interfaces (LSI) running in the same physical interface. Potentially, there could be an isolated Logical Secure Element (LSE).

This concept has been adapted in MEP in the way that there is not necessarily a LSE behind each LSI. LSIs are called eSIM ports in GSMA specifications. Following this concept each of the enabled MNO profiles have a dedicated eSIM port.

The SGP.22 specification, among other things, defines a set of commands used for profile management operations that must be implemented by the ISD-R (Issuer Security Domain Root), i.e. the extension of the ISD defined in GlobalPlatform specifications.

Mainly, there are two implementation options for MEP based on how the profile management operations are handled:

### 1) MEP A:

The profile management operations may only be carried out on a dedicated eSIM Port.

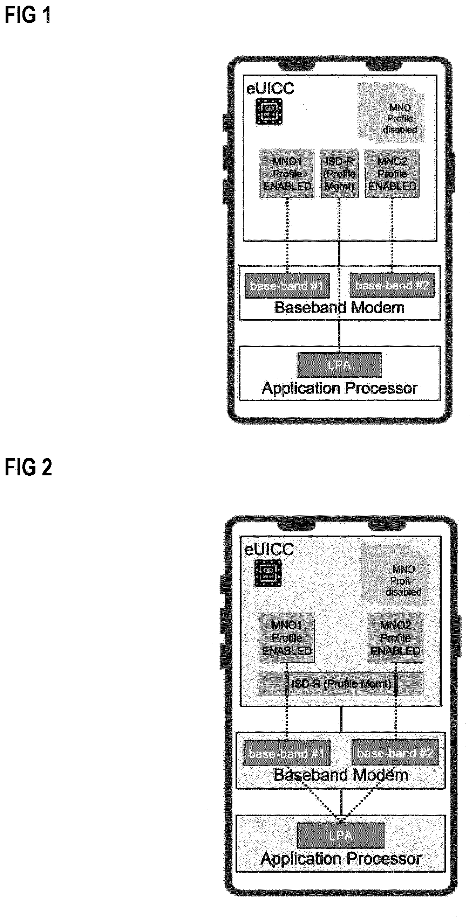

This could be graphically represented as shown in Figure 1.

In addition there are two subvariants of MEP A, depending on which entity assigns the eSIM port number:
- MEP A1: eSIM port number assigned by the baseband modem.
- MEP A2: eSIM port number assigned by the eUICC.

### 2) MEP B:

The profile management operations may be carried out on the eSIM Ports already assigned to the enabled MNO profiles. This could be graphically represented as shown in Figure 2.

In parallel, GSMA has brought a new specification dedicated to IoT Devices that may have either Network constraints (limited bandwidth for connectivity) or User Interface constraints (no UI for direct user operation). This is SGP.32 v1.2 specification that has already been released and it is meant to replace in the future the SGP.02 specification that at high level has the same features. Compared to SGP.22, in a nutshell, SGP.32 adds new functionality to enable remote profile management operations and remove, up to a certain extent, the local profile management operations. However, there are incompatibilities at the ISD-R level because same commands defined for both SGP.22 and SGP.32 have a different syntax.

At this moment, MEP is not supported in SGP.32. Due to similarities with the SGP.22 specification, it is expected that MEP defined for SGP.32 will be based on the SGP.22 MEP.

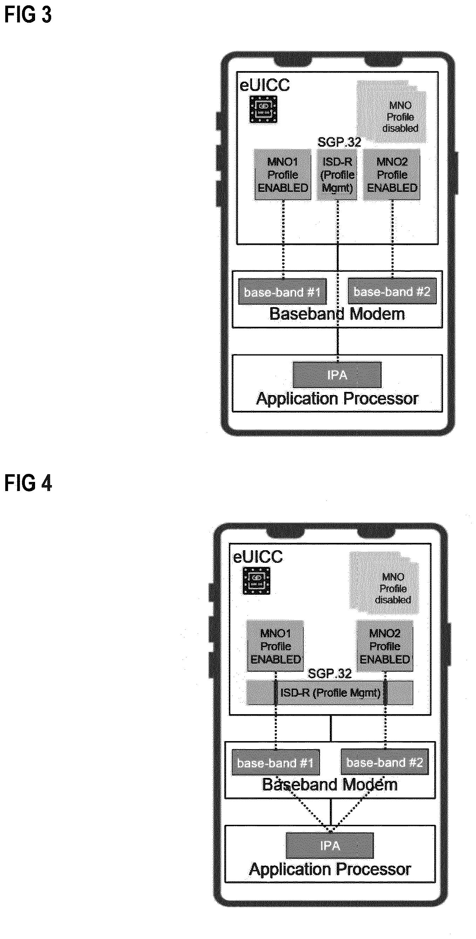

Assuming that there will be the equivalent SGP.22 MEP A and SGP.22 MEP B in SGP.32, this would look like as shown in Figure 3 (MEP-A) and Figure 4 (MEP-B).

The main difference are that the ISD-R is based on SGP.32 command set and the Local Profile Assistant (LPA) is replaced by the IoT Profile Assistant (IPA).

There is a need to improve eUICC devices. In particular, there is a preferred need to provide eUICC devices in such a manner that advantages such as PCB footprint reduction, reduction of Stock-keeping units (SKU), simpler logistics and/or cost saving are achieved.

The present invention addresses the above object by the subject-matter covered by the independent claim. Preferred embodiments of the invention are defined in the dependent claims.

### SUMMARY OF THE INVENTION

1. (First aspect of the invention) Device for use in wireless communication, said device comprising an embedded universal integrated circuit card (eUICC) and a communication modem, wherein the eUICC comprises a first part and a second part, wherein the first part of the eUICC denoted as SGP.22 part comprises a first profile denoted as MNO1 profile and a first Issuer Security Domain Root (ISD-R) and the second part of the eUICC denoted as SGP.32 part comprises a second profile denoted as MNO2 profile and a second Issuer Security Domain Root (ISD-R), wherein at least two baseband processors for wireless communication are mounted in the communication modem and the MNO1 profile occupies a first baseband processor and the MNO2 profile occupies a second baseband processor, wherein the first ISD-R is selectable by a Local Profile Assistant (LPA) managing the MNO1 profile, and the second ISD-R is selectable by an IoT Profile Assistant (IPA) managing the MNO2 profile, wherein the device is configured in such a way that at least one of the MNO1 profile and the MNO2 profile is in the enabled state.
2. (Preferred embodiment) Device according to clause 1, wherein the device is configured in such a way that both the MNO1 profile and the MNO2 profile are in the enabled state simultaneously.
3. (Preferred embodiment) Device according to clause 1 or 2, wherein in the SGP.22 part of the eUICC an eSIM port denoted as eSIM port #0 is used by the first ISD-R and an eSIM port denoted as eSIM port #2 is used by the MNO1 profile and in the SGP.32 part of the eUICC an eSIM port denoted as eSIM port #1 is used by the second ISD-R and an eSIM port denoted as eSIM port #3 is used by the MNO2 profile.
4. (Preferred embodiment) Device according to any of clauses 1 to 3, wherein both the first ISD-R and the second ISD-R are logical ISD-Rs comprised within an ISD-R base which contains features, credentials and data that are common to all logical ISD-Rs
5. (Preferred embodiment) Device according to clause 4, wherein the in the SGP.22 part of the eUICC an eSIM port denoted as eSIM port #x is used by the MNO1 profile and an eSIM port denoted as eSIM port #0 is used by the first ISD-R and in the SGP.32 part of the eUICC an eSIM port denoted as eSIM port #1 is used by the second ISD-R and an eSIM port denoted as eSIM port #y is used by the MNO2 profile.
6. (Preferred embodiment) Device according to clause 4, wherein in the SGP.22 part of the eUICC an eSIM port denoted as eSIM port #0 is used by both the MNO1 profile and the first ISD-R and in the SGP.32 part of the eUICC an eSIM port denoted as eSIM port #1 is used by both the MNO2 profile and the second ISD-R.
7. (Preferred embodiment) Device according to any of clauses 1 to 6, wherein three baseband processors for wireless communication are mounted in the communication modem, the second part of the eUICC denoted as SGP.32 part further comprises a third profile denoted as MNO3, the MNO1 profile occupies a first baseband processor, the MNO2 profile occupies a second baseband processor, the MNO3 profile occupies a third baseband processor, the second ISD-R is selectable by an IoT Profile Assistant (IPA) managing the MNO2 profile and the MNO3 profile, wherein the device is configured in such a way that at least one of the MNO1 profile, the MNO2 profile and the MNO3 profile is in the enabled state.
8. (Preferred embodiment) Device according to clause 7, wherein the device is configured in such a way that each of the MNO1 profile, the MNO2 profile and the MNO3 profile altogether are in the enabled state.
9. (Preferred embodiment) Device according to clause 7 or 8, wherein both the first ISD-R and the second ISD-R are logical ISD-Rs comprised within an ISD-R base which contains features, credentials and data that are common to all logical ISD-Rs, wherein in the SGP.22 part of the eUICC an eSIM port denoted as eSIM port #2 is used by the MNO1 profile and an eSIM port denoted as eSIM port #0 is used by the first ISD-R and in the SGP.32 part of the eUICC an eSIM port denoted as eSIM port #1 is used by the second ISD-R and an eSIM port denoted as eSIM port #3 is used by the MNO2 profile and an eSIM port denoted as eSIM port #4 is used by the MNO3 profile.

### DESCRIPTION OF THE PREFERRED EMBODIMENTS

The present invention provides a device for use in wireless communication, said device comprising an embedded universal integrated circuit card (eUICC) and a communication modem, wherein the eUICC comprises a first part and a second part, wherein the first part of the eUICC denoted as SGP.22 part comprises a first profile denoted as MNO1 profile and a first Issuer Security Domain Root (ISD-R) and the second part of the eUICC denoted as SGP.32 part comprises a second profile denoted as MNO2 profile and a second Issuer Security Domain Root (ISD-R), wherein at least two baseband processors for wireless communication are mounted in the communication modem and the MNO1 profile occupies a first baseband processor and the MNO2 profile occupies a second baseband processor, wherein the first ISD-R is selectable by a Local Profile Assistant (LPA) managing the MNO1 profile, and the second ISD-R is selectable by an IoT Profile Assistant (IPA) managing the MNO2 profile, wherein the device is configured in such a way that at least one of the MNO1 profile and the MNO2 profile is in the enabled state.

Further aspects, features and advantages of the present invention will become apparent to those of ordinary skills in the art upon reviewing the following detailed description of preferred embodiments and variants of the present invention in conjunction with the accompanying figures.

Reference will now be made to the accompanying figures, in which:
FIG. 1 illustrates an example of an MEP concept;
FIG. 2 illustrates another example of an MEP concept;
FIG. 3 illustrates another example of an MEP concept;
FIG. 4 illustrates another example of an MEP concept;
FIG. 5 illustrates a device according to an embodiment of the disclosure;
FIG. 6 illustrates a device according to another embodiment of the disclosure;
FIG. 7 illustrates a device according to another embodiment of the disclosure;
FIG. 8 illustrates a device according to another embodiment of the disclosure;
FIG. 9 illustrates a device according to another embodiment of the disclosure;
FIG. 10 illustrates a device according to another embodiment of the disclosure; and
FIG. 11 illustrates a device according to another embodiment of the disclosure.

As of today, there are in the market devices that make use of both SGP.22 (based on consumer profiles managed directly by the user) and SGP.02 (based on the specific connectivity use cases of the device owner that are managed remotely). This is provided with separate chips (one for SGP.22 and another one for SGP.02). These use cases are mainly found in the automotive market segment (the car is the device), but it is also expected to be requested in other IoT devices such as laptops, etc.

Specifically, the automotive use case is:
- SGP.22: manage the connectivity of the driver.
- SGP.02: manage the connectivity of the TCU (Telematics Control Unit) of the car used for telematics purposes.

Since products based on SGP.32 will eventually replace products based on SGP.02, it is desirable to have a hybrid SGP.22 + SGP.32 product implemented in the same eUICC. This means that there is:
- SGP.22 part which deals with SGP.22 profiles and SGP.22 ISD-R functionalities.
- SGP.32 part which deals with SGP.32 profiles and SGP.32 ISD-R functionalities.

There is a large interest in the industry to reduce the number of chips to address this use case, because having a single chip that supports SGP.22 + SGP.32 brings many advantages such as PCB footprint reduction, reduction of SKUs, simpler logistics and cost saving.

In addition to the SGP.22 + SGP.32 hybrid concept, it is also proposed to have as an option an MEP version for this hybrid solution (MEP SGP.22+SGP.32), which is a particular target of this invention.

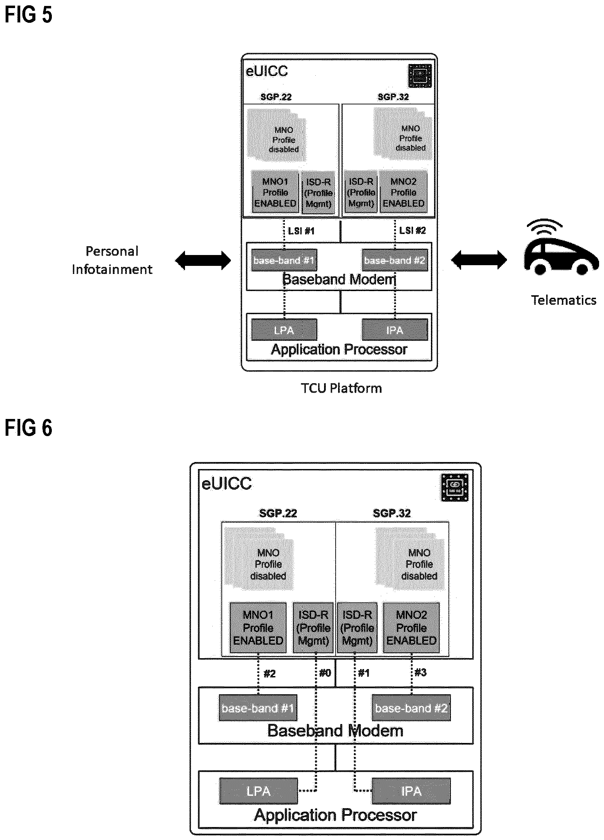

A preferred embodiment for an MEP version for the hybrid solution SGP.22 + SGP.32 is shown in Figure 5.

According to the embodiment shown in Figure 5, the multiple enabled profiles will refer to having, at least, simultaneously enabled both: one SGP.22 profile and one SGP.32 profile. The number of enabled profiles supported could be higher if the memory resources of the platform allows it.

The concept described below could apply to any number and combination of SGP.22 and SGP.32 enabled profiles. For simplicity, for all the text description and the examples shown below, it is assumed that there is at maximum one SGP.22 Profile and one SGP.32 Profile enabled simultaneously.

Zooming in into the solution, it is possible to have a more detailed view of the MEP SGP.22+SGP.32.

Following an MEP A1 based approach, the eSIM ports are distributed as follows:
- SGP.22 Part:
   - eSIM Port #0: SGP.22 ISD-R
   - eSIM Port #2: SGP.22 Profile (Enabled)
- SGP.32 Part:
   - eSIM Port #1: SGP.32 ISD-R
   - eSIM Port #3: SGP.32 Profile (Enabled)

The eSIM ports used for the ISD-R (i.e. SGP.22 ISD-R and SGP.32 ISD-R) shall preferably be fixed in a way that LPA/IPA software modules and eUICC know which eSIM port is used for SGP.22 ISD-R and which one is used for SGP.32 ISD-R. The example above shows one option, but it could be any eSIM port number that is supported by both the baseband modem and the eUICC.

The eSIM ports used for the MNO profiles can be freely assigned by the baseband modem (as long as it does not exceed the maximum number of LSIs supported by the baseband modem and the eUICC) and shall not be bound to a dedicated use case (i.e. it could be assigned to either an SGP.22 profile or an SGP.32 profile) because from baseband modem point of view, it is agnostic of whether it is an SGP.22 profile or it is an SGP.32 profile.

The technical way to perform this eSIM port alignment is by extending the current negotiation procedure based on the use of MANAGE LSI (configure LSI) APDU defined in ETSI 102 221 and extended in SGP.22 v3.1 to add the information of the MEP modes supported and the number of enabled profiles supported. In that case, the MANAGE LSI (configure LSI) APDU sent by the baseband modem shall be extended in order to provide the needed information so the eSIM port mapping is done successfully:
- The coding of MEP mode is extended to include values that is used by the baseband modem and the eUICC to report the support of the SGP.22+SGP.32 hybrid modes of MEP-A1, MEP-A2 and MEP-B.
- If not pre-fixed or not fixed by specification (for MEP-A1 Hybrid) the baseband modem shall provide a proposal for the eSIM Port #s for the ISD-R part:
   - eSIM Port # for ISD-R SGP.22
   - eSIM Port # for ISD-R SGP.32

The assignment of the eSIM Port # used for the profiles can be inferred from knowing the eSIM ports assigned to the different ISD-Rs, the number of enabled profiles supported and the highest value of LSI.

A coordinated map of eSIM Ports that prevents collisions (i.e. use of the same eSIM Port) is needed for MEP-A1 in case the LPA and IPA software modules are isolated entities. Such collisions may have an impact on the user experience, therefore LPA and IPA shall be aware of the eSIM ports used for the corresponding ISD-R (e.g. LPA for SGP.22 ISD-R) and for the eSIM port where the profiles have to be enabled and are under their control (e.g. LPA needs to know that the eSIM Port#2 is the one to use in case SGP.22 Profile is enabled).

If a terminal uses a non-removable UICC and the LSI configuration to be used is pre-agreed between terminal and UICC (by a mechanism out of scope of the present document), the setup may be skipped.

As described in the introduction, as of today, SGP.32 specification relies very much on SGP.22 specifications. This results in that a significant part of SGP.32 functionality is the same as SGP.22 (e.g. profile download procedure).

In the embodiment shown in Figure 6, SGP.22 and SGP.32 functionality are implemented by different ISD-Rs.

Each one of these ISD-Rs has a different and dedicated storage for credentials/information. In both, SGP.22 and SGP.32, there a common type of credentials (e.g. GSMA certificate chain) and other information (e.g. Rule Authorization table) that are configured and stored in the ISD-R. There is also specific credentials/information that only applies to one of the SGP variants (e.g. eIM certificate for SGP.32) that are also configured and stored in the ISD-R.

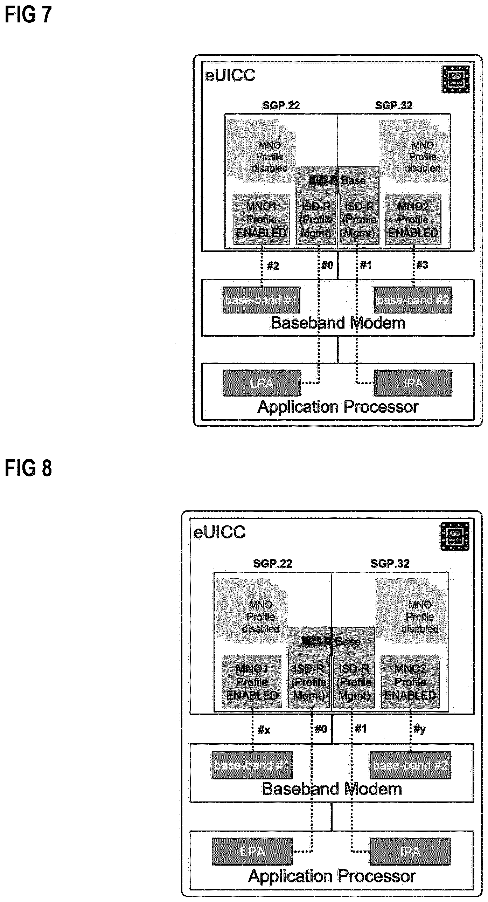

Another embodiment is shown in Figure 7.

In order to have an efficient use of resources and prevent unnecessary duplication of functionalities, the ISD-R functionality is shared among SGP.22 and SGP.32 functionality. This prevents, among other things, to define a new AID for the ISD-R.

If the business conditions allows, this efficient use of resources could be also applied to the credentials/data storage part. For instance, same GSMA certificate chain stored in the ISD-R could be used for both SGP.22 and SGP.32. (Note: GSMA Certification chain is used to authenticate and enable the secure communication with the different RSP Servers that are part of the GSMA ecosystem).

The credentials/data that may be shared in the ISD-R for both SGP.22 and SGP.32 includes, but not limited to:
- GSMA eUICC certificates;
- GSMA EUM certificates;
- Rules Authorization Table.

Due to the dependency on business conditions and/or use case, the implementation shall, preferably, be flexible in a way that the use of common storage for some of the credentials/data shall be optional and configured during the setup phase of the product. This configuration can be done in a modular way (e.g. GSMA eUICC certificates configured as shared but Rules Authorization Table configured as not shared).

This introduces the concepts of Logical ISD-R and ISD-R base, which are similar to Logical SE and Logical SE Base terminology used in ETSI TS 102.221:
- Logical ISD-R is a representation of the ISD-R that provides the whole functionality defined in RSP specification (e.g. SGP.22 or SGP.32) and stores the corresponding credentials/data.
- ISD-R base contains the features and the credentials/data that are common to all Logical ISD-Rs.

Note: In general ISD-R term will be used which refers to the combination of Logical ISD-R and ISD-R base. Whenever it is needed, specific term will be explicitly used.

Another embodiment is shown in Figure 8.

The ISD-R shall be able to identify from which eSIM Port a given command is received.

In this way, the ISD-R is able to distinguish if the command received follows SGP.22 specification or SGP.32 specification and then act as follows:
- Command received on eSIM Port #0 shall follow SGP.22 Specification and handle the SGP.22 dedicated storage area and the profiles stored in such area.
- Command received on eSIM Port #1 shall follow SGP.32 Specification and handle the profile storage and the profiles stored in the SGP.32 area.

This technical method enables the ISD-R to implement the necessary security measures to enforce this isolation.

This concept shall ensure that an SGP.22 command received on eSIM Port #0 shall not access or modify the SGP.32 area, including the SGP.32 profiles. It shall also work the other way around: SGP.32 command received on eSIM Port#1 shall not access or modify the SGP.22 area. If configured, the access to the common storage area of the ISD-R base shall be possible in both cases.

In addition, during the profile download and installation method, in case of successful installation, the ISD-R shall be able to tag such profile with the needed information to identify the installed profile as either SGP.22 or SGP.32.

Following an MEP A2 based approach, the eSIM ports are distributed as follows:
- SGP.22 Part:
   - eSIM Port #0: SGP.22 ISD-R
   - eSIM Port #x: SGP.22 Profile (Enabled)
- SGP.32 Part:
   - eSIM Port #1: SGP.32 ISD-R
   - eSIM Port #y: SGP.32 Profile (Enabled)

The eSIM ports used for the ISD-R (i.e. SGP.22 ISD-R and SGP.32 ISD-R) shall be fixed (same mechanism as described for MEP A1). The eSIM ports used for the MNO profiles (#x and #y) are dynamically assigned/freed by the eUICC whenever the profiles are enabled/disabled.

In this case, the ISD-R Base shall have all the information required to know which eSIM Port #'s are used by currently enabled profiles in order to assign an eSIM Port when there is another profile being enabled.

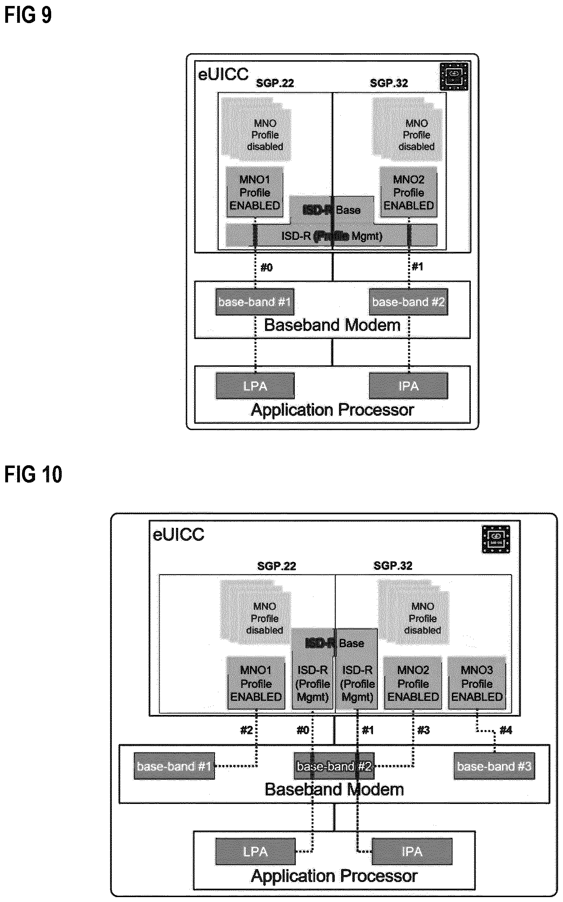

Another embodiment is shown in Figure 9.

Following an MEP B based approach, the eSIM ports are distributed per use case as follows:
- SGP.22 Part:
   - eSIM Port #0: SGP.22 ISD-R and SGP.22 Profile (Enabled)
- SGP.32 Part:
   - eSIM Port #1: SGP.32 ISD-R and SGP.32 Profile (Enabled)

The eSIM ports used for the ISD-R+SGP.x2 (i.e. SGP.22 ISD-R+Profiles and SGP.32 ISD-R+Profiles) shall be fixed and configured in the same way as it is described for MEP-A1.

All the statements made for MEP A are easily adapted to the MEP B version of MEP SGP.22+SGP.32 Hybrid as follows:
- Command received on eSIM Port #0 shall follow SGP.22 Specification and handle the SGP.22 dedicated storage area and the profiles stored in such area.
- Command received on eSIM Port #1 shall follow SGP.32 Specification and handle the profile storage and the profiles stored in the SGP.32 area.
- Use of eSIM Port #0 is restricted to only SGP.22 enabled profiles and similarly the use of eSIM Port #1 is restricted to only SGP.32 enabled profiles.

### Extension to more profiles:

It is assumed that in a Hybrid SGP.22 + SGP.32 product at least two enabled supported profiles shall be supported and the following combination shall be supported:
- SGP.22 enabled profile + SGP.32 enabled profile

**Table 1:**

| Profile enabled 1 | Profile enable 2 |
|---|---|
| SGP.22 | SGP.32 |

It could be technically possible to have other combinations such as:
- SGP.22 enabled profile + SGP.22 enabled profile
- SGP.32 enabled profile + SGP.32 enabled profile

But those combinations do not represent a Hybrid SGP.22 + SGP.32 but SGP.22 MEP or SGP.32 MEP. Therefore, those combinations are not considered for the hybrid concept, although they could be in order to have the same eOS binary to be technically capable to work as Hybrid SGP.22 + SGP.32 or as a SGP.22 MEP or SGP.32 MEP.

As mentioned above, the concept could apply to any number and combination of SGP.22 and SGP.32 enabled profiles. The maximum number of enabled profiles is a SW platform design consideration, as it implies a considerable amount of resources (mainly RAM). This setting should not be restricted to a specific use case (i.e. to SGP.22 and SGP.32). This means that if the eUICC eOS supports a maximum number of three enabled profiles, the hybrid SGP.22+SGP.32 design shall support the following combinations of enabled profiles:

**Table 2:**

| Profile enabled 1 | Profile enabled 2 | Profile enabled 3 |
|---|---|---|
| SGP.22 | SGP.32 | SGP.22 |
| | | SGP.32 |

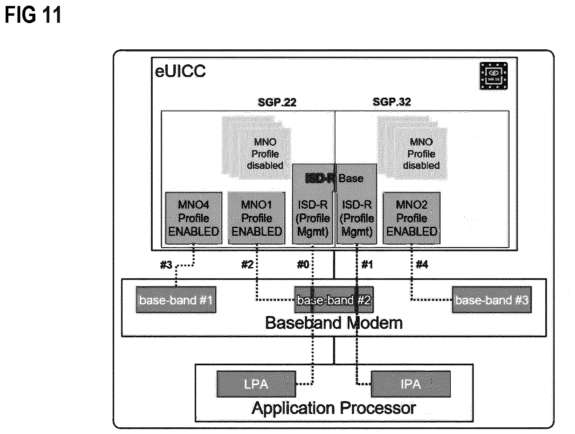

The embodiments shown in Figure 10 and Figure 11 (MEP-A1) provide an overview of the eSIM port configuration that enable these scenarios.

The same approach could be done for four enabled profiles.

### General remarks:

There are use cases requiring to have both consumer profiles (SGP.22) and IoT profiles (SGP.32) residing on the same physical eUICC. If that eUICC is MEP capable both the consumer and IoT profiles may be enabled at the same time.

If MEP is not supported the same use cases apply, however, such an eUICC would need to switch between the profiles and the two different modes (SGP.22 or SGP.32).

The present invention provides functional and security requirements, architecture and a technical solution for a so-called hybrid eSIM solution capable of operating according to both SGP.22 and SGP.32 by either switching between the two or, in case MEP is supported, by operating profiles that are enabled for both SGP.22 and SGP.32 on the same eUICC.

Use-cases include, but are not limited to:
- A certain car maker integrates an eUICC with "hybrid" support in its cars. The eUICC contains two profiles. One of the profiles is used by the car maker to provide telematics connectivity services or to perform a software update within the vehicle. These services are realized based on SGP.32 and also require SGP.32 profile state management. The second profile on the same eUICC is used by the car driver for infotainment services and for making phone calls. This profile is a consumer profile according to SGP.22. Both profiles (SGP.32 and SGP.22) reside on the same eUICC and are, in case MEP is supported, both enabled, so that if, for example, a software download is taking place while the car driver is using the infotainment service with the consumer profile (SGP.22), the telematics connectivity (SGP.32) can be used to immediately perform the software download without the need to disable the consumer profile and to enable the telematics profile. A comparable use case applies to "hybrid" routers that contain both an SGP.32 profile allowing management of the device via an eIM and an SGP.22 managed by the consumer.
- A certain car maker wants to download a new emergency call profile to the eUICC as specified in SGP.32. This profile is to be downloaded to an eUICC that already contains an enabled SGP.22 consumer profile used by the car driver. To download the emergency call profile the eUICC has to indicate to the SM-DP+ that it is an SGP.32 compliant eUICC supporting the emergency call feature. After the download, the driver changes and a new consumer profile SGP.22 is needed. To download this SGP.22 new consumer profile, the eUICC indicates to the SM-DP+ that it is an SGP.22 compliant eUICC. In the event of an accident the eUICC will disable the SGP.22 consumer profile and enable the SGP.32 emergency profile to establish the emergency call. If the MEP is supported, the emergency profile may be enabled in addition to the consumer profile and the emergency call can be established without the need to switch between the profiles.
- A certain car maker decides to change its car connectivity contracts in Country X from MNO A to MNO B. Therefore, the car maker downloads a telematics profile from MNO B to the eUICCs according to SGP.32. This telematics profile is downloaded to an eUICC that already contains an SGP.22 consumer profile used by the car driver. In the event of a telematics use case like a software download, the eUICC will disable the SGP.22 consumer profile and enable the SGP.32 profile from MNO B to establish the connection. If the eUICC supports MEP, MNO B profile may be enabled in addition to the consumer profile and the telematics services can be initiated without switching between the profiles.
- A certain car maker wants to download an additional telematics fallback profile from MNO B to the eUICC as specified in SGP.32. This profile is used in case the connectivity is lost with the telematics profile of MNO A. To download the MNO B profile the eUICC indicates to the SM-DP+ that it is an SGP.32 compliant eUICC. Even if MNO A profile is disabled and MNO B profile is enabled, SGP.22 consumer profile is not affected and still enabled, in case MEP is supported.

The present invention provides a hybrid eSIM solution that allows switching between SGP.22 and SGP.32 and that operates according to both SGP.22 and SGP.32. In particular, functional and security requirements for all involved entities, e.g. eUICC, SM-DP+, eIM, are defined, ensuring that:
- an SGP.32 eIM is not allowed to manage eSIM consumer profiles;
- an SGP.22 consumer is not allowed to manage eSIM IoT profiles.

The term "device" or "terminal" used herein may be referred to as a mobile station, a user equipment, a user terminal, an access terminal, a subscriber unit, a subscriber station, a wireless device, a wireless communication device, a wireless transmit/receive unit, a mobile node, a mobile or a vehicle, wherein the device preferably is a vehicle.

Basically, a UICC is a smart card that is inserted into a mobile communication terminal for use and may refer to a chip that stores personal information about a mobile communication subscriber, such as network access authentication information, a telephone directory, or a short message service (SMS), and performs subscriber authentication and traffic security key generation to enable the secure use of mobile communication when accessing a mobile communication system, such as GSM, wideband code division multiple access (WCDMA), LTE, or 5G. A communication application, such as a subscriber identification module (SIM), a universal SIM (USIM), or an IP multimedia SIM (ISIM), may be installed in the UICC depending on the type of a mobile communication network to which the subscriber connects, and the UICC may provide a high-level security function for installing various applications, such as an electronic wallet, a ticketing application, or an electronic passport.

An embedded UICC (eUICC) can download and install a profile using an over-the-air (OTA) technology. An eUICC may be referred to as a UICC capable of downloading and installing a profile. A method of downloading and installing a profile in an eUICC using the OTA technology may also be applied to a detachable UICC that can be inserted into and removed from a terminal.

A profile may refer to a packaged software form of an application, a file system, and an authentication key value stored in a UICC. The profile may be referred to as access information. A USIM profile may have the same meaning as a profile or may refer to a packaged software form of information included in a USIM application in the profile.

A profile server is a server capable of providing a function of generating a profile, encrypting a generated profile, generating a profile remote management instruction, or encrypting a generated profile remote management instruction or including a function of supporting a terminal in activating a plurality of profiles and may be expressed as subscription manager data preparation (SM-DP), subscription manager data preparation plus (SM-DP+), or subscription manager secure routing (SM-SR).

A terminal or device may include software or an application installed in the terminal or device to control the UICC or eUICC. The software or application may be referred to as, for example, a local profile assistant (LPA), in particular an LPA as defined in SGP.22 v3.1, or an IoT Profile Assistant (IPA), in particular an IPA as defined in SGP.32 v1.2.

## Claims

1. Device for use in wireless communication, said device comprising an embedded universal integrated circuit card (eUICC) and a communication modem, wherein the eUICC comprises a first part and a second part, wherein the first part of the eUICC denoted as SGP.22 part comprises a first profile denoted as MNO1 profile and a first Issuer Security Domain Root (ISD-R) and the second part of the eUICC denoted as SGP.32 part comprises a second profile denoted as MNO2 profile and a second Issuer Security Domain Root (ISD-R), wherein at least two baseband processors for wireless communication are mounted in the communication modem and the MNO1 profile occupies a first baseband processor and the MNO2 profile occupies a second baseband processor, wherein the first ISD-R is selectable by a Local Profile Assistant (LPA) managing the MNO1 profile, and the second ISD-R is selectable by an IoT Profile Assistant (IPA) managing the MNO2 profile, wherein the device is configured in such a way that at least one of the MNO1 profile and the MNO2 profile is in the enabled state.

2. Device according to claim 1, wherein the device is configured in such a way that both the MNO1 profile and the MNO2 profile are in the enabled state simultaneously.

3. Device according to claim 1 or 2, wherein in the SGP.22 part of the eUICC an eSIM port denoted as eSIM port #0 is used by the first ISD-R and an eSIM port denoted as eSIM port #2 is used by the MNO1 profile and in the SGP.32 part of the eUICC an eSIM port denoted as eSIM port #1 is used by the second ISD-R and an eSIM port denoted as eSIM port #3 is used by the MNO2 profile.

4. Device according to any of claims 1 to 3, wherein both the first ISD-R and the second ISD-R are logical ISD-Rs comprised within an ISD-R base which contains features, credentials and data that are common to all logical ISD-Rs

5. Device according to claim 4, wherein the in the SGP.22 part of the eUICC an eSIM port denoted as eSIM port #x is used by the MNO1 profile and an eSIM port denoted as eSIM port #0 is used by the first ISD-R and in the SGP.32 part of the eUICC an eSIM port denoted as eSIM port #1 is used by the second ISD-R and an eSIM port denoted as eSIM port #y is used by the MNO2 profile.

6. Device according to claim 4, wherein in the SGP.22 part of the eUICC an eSIM port denoted as eSIM port #0 is used by both the MNO1 profile and the first ISD-R and in the SGP.32 part of the eUICC an eSIM port denoted as eSIM port #1 is used by both the MNO2 profile and the second ISD-R.

7. Device according to any of claims 1 to 6, wherein three baseband processors for wireless communication are mounted in the communication modem, the second part of the eUICC denoted as SGP.32 part further comprises a third profile denoted as MNO3, the MNO1 profile occupies a first baseband processor, the MNO2 profile occupies a second baseband processor, the MNO3 profile occupies a third baseband processor, the second ISD-R is selectable by an IoT Profile Assistant (IPA) managing the MNO2 profile and the MNO3 profile, wherein the device is configured in such a way that at least one of the MNO1 profile, the MNO2 profile and the MNO3 profile is in the enabled state.

8. Device according to claim 7, wherein the device is configured in such a way that each of the MNO1 profile, the MNO2 profile and the MNO3 profile altogether are in the enabled state.

9. Device according to claim 7 or 8, wherein both the first ISD-R and the second ISD-R are logical ISD-Rs comprised within an ISD-R base which contains features, credentials and data that are common to all logical ISD-Rs, wherein in the SGP.22 part of the eUICC an eSIM port denoted as eSIM port #2 is used by the MNO1 profile and an eSIM port denoted as eSIM port #0 is used by the first ISD-R and in the SGP.32 part of the eUICC an eSIM port denoted as eSIM port #1 is used by the second ISD-R and an eSIM port denoted as eSIM port #3 is used by the MNO2 profile and an eSIM port denoted as eSIM port #4 is used by the MNO3 profile.
